# EUROPÄISCHE PATENTANMELDUNG

(11) **EP 1 629 707 A1**
(43) Veröffentlichungstag der Anmeldung: **01.03.2006**
(21) Anmeldenummer: 05014913.7
(22) Anmeldetag: 09.07.2005
(51) Int. Cl.: A01D 41/14

(54) **Vorsatzgerät für Erntemaschine**

(30) Priorität: 31.08.2004 DE 102004042437
(71) Anmelder: CLAAS Selbstfahrende Erntemaschinen GmbH, 33428 Harsewinkel (DE)
(72) Erfinder: Bürmann, Dominik, 33415 Verl (DE)

(57) **Zusammenfassung**

Die Erfindung betrifft ein Vorsatzgerät für eine selbstfahrende Erntemaschine (2) mit einem Arbeitsorgan (8) und einem Schneidtisch (6) mit wenigstens zwei über jeweils wenigstens einen Mähmesserantriebsstrang (10) angetriebenen Mähbalkenabschnitten (9), wobei die Mähmesserantriebsstränge (10) über das Arbeitsorgan (8) miteinander gekoppelt sind.

## Beschreibung

Die Erfindungen betrifft ein Vorsatzgerät für eine selbstfahrende Erntemaschine, vorzugsweise einen Mähdrescher gemäß dem Oberbegriff des Anspruchs 1.

In der US 3,577,716 ist ein Vorsatzgerät einer Erntemaschine offenbart, bei dem die zwei Mähbalkenabschnitte separat über jeweils einen Antriebsstrang angetrieben werden, wobei jeder Antriebsstrang einzeln an eine an der Erntemaschine angeordneten Antriebseinheit gekoppelt ist. Die Drehbewegung der Antriebseinheit wird in den Messergetrieben der Messerantriebsstränge in eine oszillierende Bewegung umgewandelt, um die Mähbalkenabschnitte hin- und hergehend anzutreiben. Die beiden Mähbalkenabschnitte erstrecken sich annähernd über die Hälfte des Mähbalkens und bewegen sich zueinander entgegengesetzt.

Nachteilig bei diesem bekannten Vorsatzgerät ist, dass beim Ankoppeln der beiden Antriebsstränge an die Antriebseinheit des Mähdreschers die Lage der Mähbalkenabschnitte zueinander kontrolliert werden muss und gegebenenfalls auszurichten ist, damit die Mähbalkenabschnitte sich entgegengesetzt zueinander hin- und herbewegen, da nur dann die Schwingungen des Vorsatzgerätes durch die massenausgleichsgerechte Bewegungsrichtung der Mähbalkenabschnitte und der symmetrischen Massenverteilung gedämpft werden.

Der Erfindung liegt daher die Aufgabe zugrunde, ein Vorsatzgerät zu schaffen, das die Nachteile des Standes der Technik vermeidet und bei dem die aufeinander abgestimmte Bewegung der Mähbalkenabschnitte zueinander dauerhaft festgelegt ist.

Diese Aufgabe wird erfindungsgemäß durch die kennzeichnenden Merkmale des Anspruchs 1 gelöst. Weitere vorteilhafte Wirkungen des Erfindungsgegenstandes ergeben sich aus den Unteransprüchen.

Indem die Mähmesserantriebsstränge vorteilhafterweise über zumindest ein Arbeitsorgan des Vorsatzgerätes miteinander gekoppelt sind, bleiben die Mähmesserantriebsstränge auch bei der Demontage des Vorsatzgerätes miteinander verbunden, so dass die aufeinander abgestimmte Bewegung zweier Mähbalkenabschnittes dauerhaft festgelegt ist.

In einer vorteilhaften Ausgestaltung des erfindungsgemäßen Vorsatzgerätes ist das Arbeitsorgan als eine Einzugsschnecke ausgebildet, mit der das Erntegut zu dem Schrägförderer befördert wird und dabei auf die Breite der Eintrittsöffnung des Schrägförderers zusammengeführt wird, so dass die Koppelung der Mähmesserantriebsstränge über ein bereits am Vorsatzgerät vorhandenes Arbeitsgerät erfolgt.

In einer weiteren vorteilhaften Ausgestaltung des erfindungsgemäßen Vorsatzgerätes weist der Schneidtisch zwei nebeneinander angeordnete Mähbalkenabschnitte auf, die sich jeweils über eine Hälfte der Breite des Schneidwerks erstrecken und sich zueinander gegensinnig bewegen, so dass sich die durch die Hin- und Herbewegung der Mähbalkenabschnitte verursachten Kräfte gegenseitig aufheben.

In einer alternativen Ausführung des erfindungsgemäßen Vorsatzgerätes wird die Einzugsschnecke von einem Hydraulikmotor angetrieben, so dass der Mähdrescher nur über Hydraulikleitungen mit dem Vorsatzgerät verbunden ist.

Aufgrund dessen, dass die Antriebsenergie für die Mähmesserantriebsstränge von der Einzugsschnecke abgeleitet wird, werden keine zusätzlichen Antriebe für die Mähmesserantriebsstränge benötigt und die beiden Mähdrescherantriebsstränge werden synchron angetrieben.

Vorteilhafterweise dient die Einzugsschnecke als Schwungmasse für die Mähbalkenabschnitte, so dass sich die Mähbalkenabschnitte auch dann gleichförmig weiterbewegen, wenn den Mähbalkenabschnitten kurzzeitig eine höhere Schnittleistung abverlangt wird, dabei ist die rotierenden Einzugsschnecke durch ihre hohe Trägheitsmasse Energiespeicher für die Mähbalkenabschnitte.

Dadurch, dass die Einzugsschnecke die Mähdrescherantriebsstränge formschlüssig miteinander verbindet, werden die Mähbalkenabschnitte schlupffrei angetrieben und eine Verstellung der gegensinnigen Bewegung der Mähbalkenabschnitte zueinander ist nahezu ausgeschlossen.

In einer besonders vorteilhaften Ausführung des erfindungsgemäßen Vorsatzgerätes weist der Mähmesserantriebsstrang ein Winkelgetriebe mit einem Abtriebswellenende und ein auf das Abtriebswellenende verdrehsicher aufgestecktes Stirnradgetriebe auf, so dass die Umlenkung der Drehbewegung und die Übersetzung der Drehzahlen durch kostengünstige, fertig zu beziehende Standartbauteile erfolgt.

In vorteilhafter Weiterbildung der Erfindung sind das Winkelgetriebe und das Stirnradgetriebe auf einer Konsole starr gelagert, die ihrerseits starr mit dem Schneidtisch verbunden ist, so dass die Lage der Getriebe zueinander und zum Schneidtisch und insbesondere die Lage der mit dem Abtriebswellenende des Flachgetriebes verbundenen Gelenkwelle festgelegt wird.

Weitere vorteilhafte Ausführungen sind Gegenstand weiterer Unteransprüche und werden an Hand eines in einer Figur dargestellten Ausführungsbeispiels beschrieben.

Es zeigt :

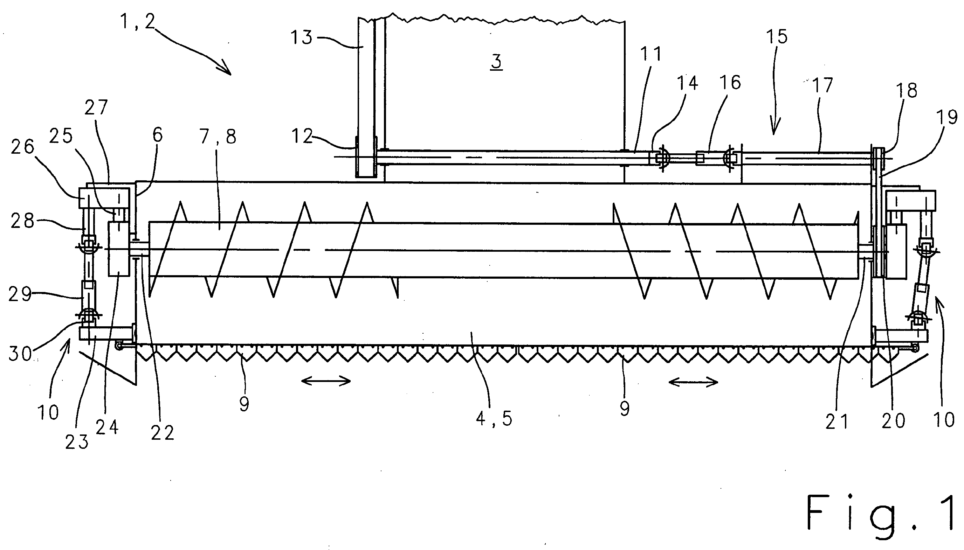

- Fig.1: den vorderen Teil einer Draufsicht eines schematisch dargestellten Mähdreschers mit dem erfindungsgemäßen Vorsatzgerät,

In der Fig.1 ist teilweise die schematische Draufsicht einer als selbstfahrender Mähdrescher 1 ausgeführten, landwirtschaftlichen Erntemaschine 2 dargestellt, an deren Schrägförderer 3 ein als Schneidwerk 4 ausgeführtes Vorsatzgerät 5 angeordnet ist. Das Schneidwerk 4 besteht im wesentlichen aus einem Schneidtisch 6 und einem als rotierend angetriebene Einzugsschnecke 7 ausgeführten Arbeitsorgan 8. Das Erntegut wird von zwei im vorderen Bereich des Schneidtischs 6 angeordneten Mähbalkenabschnitten 9 abgeschnitten und anschließend der Einzugsschnecke 7 zugeführt, die das Erntegut zu dem Schrägförderer 3 befördert. Die nebeneinander angeordneten Mähbalkenabschnitte 9 erstrecken sich jeweils annähernd über je eine Hälfte des Schneidwerks 4 und werden jeweils über einen Mähmesserantriebsstrang 10 oszillierend, angetrieben. Es liegt im Rahmen der Erfindung, das die Mähbalkenabschnitte 9 übereinander angeordnet sein können und sich beide Mähbalkenabschnitte 9 über die gesamte Breite des Schneidtischs 4 erstrecken, so dass sie zusammen ein sogenanntes Doppelmesser ergeben.

An dem Schrägförderer 3 ist eine Antriebswelle 11 mit einem Antriebsrad 12 angeordnet, die über ein Zugmittel 13 vom Hauptantrieb (nicht dargestellt) der Erntemaschine 2 angetrieben wird. Die Antriebswelle 11 ist über eine Kupplung 14 lösbar mit einem Antriebsstrang 15 zum Antrieb der einzelnen Aggregate des Schneidwerks 4 verbunden, der aus einer Gelenkwelle 16 und einer einendes damit verbundenen Eingangswelle 17 besteht, wobei die Eingangswelle 17 im Abstand zur Drehachse der Einzugsschnecke 7 am Schneidtisch 6 gelagert ist. Auf das freie Ende der Eingangswelle 17 ist ein Kettenrad 18 drehfest aufgesetzt, das über eine Kette 19 mit einem weiteren Kettenrad 20 verbunden ist, das auf einem stirnseitig an der Einzugschnecke 7 angeordneten ersten Achsende 21 der Einzugsschnecke 7 drehfest aufgesetzt ist und über welches die Einzugsschnecke 7 rotierend angetrieben wird. Es liegt im Rahmen der Erfindung, dass in einer alternativen Ausführung die Einzugsschnecke 7 über einen Hydraulikmotor angetrieben werden kann, der beispielsweise auf dem ersten Achsende 21 der Einzugsschnecke 7 aufgesteckt ist.
Auf der dem Antriebsstrang 15 gegenüberliegenden Seite des Schneidwerks 4 ist an der Einzugsschnecke 7 stirnseitig ein weiteres Achsende 22 angeordnet, welches wie auch das erste Achsende 21 verdrehfest mit der Einzugsschnecke 7 verbunden ist. Beide Achsenden 21, 22 der Einzugsschnecke 7 sind jeweils mit dem Mähmesserantriebsstrang 10 zum Antrieb jeweils eines Mähbalkenabschnittes 9 derart verbunden, dass die Antriebsenergie für die Mähbalkenabschnitte 9 von der Einzugsschnecke 7 abgeleitet wird und die Mähmesserantriebsstränge 10 über die Einzugsschnecke 7 formschlüssig und schlupffrei erfindungsgemäß miteinander gekoppelt sind. Zugleich bildet die Einzugsschnecke 7 eine Schwungmasse der Mähbalkenabschnitte 9, die durch ihre Trägheit die Mähbalkenabschnitte 9 gleichförmig weiterbewegt, auch wenn den Mähbalkenabschnitten 9 kurzzeitig eine höhere Schnittleistung abverlangt wird.
Die Mähmesserantriebsstränge 10 sind spiegelbildlich aufgebaut und bestehen jeweils aus einem drehfest auf das zugehörige Achsende 21, 22 aufgesetzten Winkelgetriebe 24 auf dessen Abtriebswellenende 25 ein Stirnradgetriebe 26 drehfest aufgeschoben ist. Sowohl das Stirnradgetriebe 26 als auch das Winkelgetriebe 24 sind starr auf einer Konsole 27 gelagert, die ihrerseits starr mit dem Schneidtisch 6 verbunden ist. An dem Stirnradgetriebes 26 ist auf der zum Winkelgetriebe 24 gerichteten Seite ein zweites Abtriebswellenende 28 angeordnet, dass über eine Gelenkwelle 29 mit der Antriebswelle 30 eines Mähbalkenabschnittegetriebes 23 verbunden ist, das die Rotationsbewegung der Gelenkwelle 29 auf an sich bekannte Weise in eine translatorische Bewegung wandelt und den zugehörigen Mähbalkenabschnitt 9 oszillierend antreibt.

Die Antriebsenergie der Einzugsschnecke 7 wird über die Mähmesserantriebsstränge 10 formschlüssig an die Mähbalkenabschnitte 9 übertragen, so dass die zueinander entgegengesetzte Bewegung der Mähbalkenabschnitte nicht verstellbar ist.

Es liegt im Rahmen des Könnens eines Fachmannes die beschriebenen Ausführungsbeispiele in nicht dargestellter Weise abzuwandeln oder in anderen Maschinensystemen einzusetzen, um die beschriebenen Effekte zu erzielen, ohne dabei den Rahmen der Erfindung zu verlassen.

### Bezugszeichenliste:

- 1: Mähdrescher
- 2: Erntemaschine
- 3: Schrägförderer
- 4: Schneidwerk
- 5: Vorsatzgerät
- 6: Schneidtisch
- 7: Einzugsschnecke
- 8: Arbeitsorgan
- 9: Mähbalkenabschnitt
- 10: Mähmesserantriebsstrang
- 11: Antriebswelle
- 12: Antriebsrad
- 13: Zugmittel
- 14: Kupplung
- 15: Antriebsstrang
- 16: Gelenkwelle
- 17: Eingangswelle
- 18: Kettenrad
- 19: Kette
- 20: weiteres Kettenrad
- 21: erstes Achsende
- 22: weiteres Achsende
- 23: Mähmessergetriebe
- 24: Winkelgetriebe
- 25: Abtriebswellenende
- 26: Stirnradgetriebe
- 27: Konsole
- 28: zweites Abtriebswellenende
- 29: Gelenkwelle
- 30: Antriebswelle

## Patentansprüche

1. Vorsatzgerät für eine selbstfahrende Erntemaschine (2) mit einem Arbeitsorgan (8) und einem Schneidtisch (6) mit wenigstens zwei über jeweils wenigstens einen Mähmesserantriebsstrang (10) angetriebenen Mähbalkenabschnitten (9),
**dadurch gekennzeichnet,**
**dass** die Mähmesserantriebsstränge (10) über zumindest ein Arbeitsorgan (8) des Vorsatzgerätes miteinander gekoppelt sind.

2. Vorsatzgerät nach Anspruch 1,
**dadurch gekennzeichnet,**
**dass** das Arbeitsorgan (8) als eine Einzugsschnecke (7) ausgebildet ist.

3. Vorsatzgerät nach wenigstens einem der vorhergehenden Ansprüche,
**dadurch gekennzeichnet,**
**dass** der Schneidtisch (6) zwei nebeneinander angeordnete Mähbalkenabschnitte (9) aufweist, die sich über jeweils annähernd eine Hälfte der Breite des Schneidtischs (4) erstrecken und sich zueinander gegensinnig bewegen.

4. Vorsatzgerät nach wenigstens einem der vorhergehenden Ansprüche,
**dadurch gekennzeichnet,**
**dass** die Einzugsschnecke (7) von einem Hydraulikmotor angetrieben wird.

5. Vorsatzgerät nach wenigstens einem der vorhergehenden Ansprüche,
**dadurch gekennzeichnet,**
**dass** die Antriebsenergie für die Mähmesserantriebsstränge (10) von der Einzugsschnecke (7) abgeleitet wird.

6. Vorsatzgerät nach wenigstens einem der vorhergehenden Ansprüche,
**dadurch gekennzeichnet,**
**dass** die Einzugsschnecke (7) als Schwungmasse für die Mähbalkenabschnitte (9) dient.

7. Vorsatzgerät nach wenigstens einem der vorhergehenden Ansprüche,
**dadurch gekennzeichnet,**
**dass** die Einzugsschnecke (7) die Mähmesserantriebsstränge (10) formschlüssig miteinander verbindet.

8. Vorsatzgerät nach wenigstens einem der vorhergehenden Ansprüche,
**dadurch gekennzeichnet,**
**dass** der Mähmesserantriebsstrang (10) ein Winkelgetriebe (24) mit einem Abtriebswellenende (25) und ein auf das Abtriebswellenende (25) verdrehsicher aufgestecktes Stirnradgetriebe (26) aufweist.

9. Vorsatzgerät nach wenigstens einem der vorhergehenden Ansprüche,
**dadurch gekennzeichnet,**
**dass** das Winkelgetriebe (24) und das Stirnradgetriebe (26) auf einer Konsole (27) starr gelagert sind, die ihrerseits starr mit dem Schneidtisch (6) verbunden ist.
